# EUROPÄISCHE PATENTSCHRIFT

(11) **EP 0 748 014 B1**
(45) Veröffentlichungstag und Bekanntmachung des Hinweises auf die Patenterteilung: **20.01.1999**
(21) Anmeldenummer: 96108187.4
(22) Anmeldetag: 22.05.1996
(51) Int. Cl.: H02B 1/32, H02B 1/42

(54) **Einrichtung zur etagenweisen Anordnung von Schaltgeräten**
Device for step-wise arrangement of switchgear
Dispositif pour l'agencement des appareils de commutation électriques en étages

(30) Priorität: 07.06.1995 DE 19520797
(43) Veröffentlichungstag der Anmeldung: 11.12.1996
(73) Patentinhaber: SIEMENS AKTIENGESELLSCHAFT, 80333 München (DE)
(72) Erfinder: Schäfer, Manfred, 96450 Coburg (DE); Stang, Alfred, (Dipl.-Ing. FH), 92224 Amberg (DE)

(56) Entgegenhaltungen:
- EP-A- 0 352 149
- DE-A- 3 922 732
- DE-U- 9 107 327
- DE-U- 9 411 821

## Beschreibung

Die Erfindung bezieht sich auf eine Einrichtung zur etagenweisen Anordnung von Schaltgeräten.

Eine gattungsgemäße Einrichtung ist aus der EP 0 352 149 A1 bekannt. Hier sind zwei Verbindungsblöcke über eine Hutschiene, auf die ein Schaltgerät aufschnappbar ist, miteinander verbunden. In zu der Hutschiene senkrechten Ebenen können diese Verbindungsblöcke an eine weitere Hutschiene angekoppelt werden, die z.B. auf einer Tragplatte befestigt ist. Andererseits ist an einem der Tragplatte abgewandten Verbindungsblock auf der Außenseite ein weiteres Schaltgerät ankoppelbar, was gegenüber der rückliegenden Hutschiene an der Tragplatte näher am Bediener angeordnet und damit besser zugänglich ist. Andererseits wird dabei in einer dazwischenliegenden Ebene ein weiteres Schaltgerät untergebracht. Der Nachteil dieser Anordnung besteht darin, daß der Zwischenraum zwischen der Tragplatte und dem zu dieser über die Verbindungsblöcke beabstandeten Schaltgerät ungenutzt bleibt.

Eine weitere Einrichtung mit den Merkmalen des Oberbegriffes des Anspruchs 1 ist aus DE-U-94 11 821 bekannt.

Der Erfindung liegt die Aufgabe zugrunde, eine Einrichtung der obengenannten Art zu schaffen, die einfach und kostengünstig in der Herstellung ist, eine einfache Handhabung bei der Montage und Demontage der Schaltgeräte ermöglicht und eine verbesserte Raumausnutzung ermöglicht.

Erfindungsgemäß wird die Aufgabe durch folgende Merkmale gelöst:
die Einrichtung umfaßt eine Schubplatte,
auf die Schubplatte ist ein zweites Schaltgerät aufschnappbar,
die Schubplatte ist mit dem aufgeschnappten zweiten Schaltgerät geführt in den Zwischenraum einschiebbar.

Eine vorteilhafte Weiterbildung der Erfindung besteht, wenn die Schenkelenden des Bügels als Führungsschienen ausgebildet sind.

Es ist vorteilhaft, wenn die Schubplatte in der eingeschobenen Stellung an dem Bügel verrastbar ist.

Vorteilhafter Weise dient die Frontplatte eines Sammelschienenadapters als Tragplatte.

Zur Befestigung des zweiten Schaltgeräts ist es zweckmäßig, wenn auf der Schubplatte auf der dem Zwischenraum zugewandten Seite Befestigungsmittel vorgesehen sind.

Sind an der Schubplatte Rastarme mit Rastnasen vorgesehen, die in formmaßig angepaßten Ausnehmungen an der Innenseite der Schenkelenden des Bügels verrastbar sind, so wird auf diese Weise eine einfache Festlegung der Schubplatte in der Betriebsstellung erreicht.

Es ist außerdem von Vorteil, wenn das erste Schaltgerät am Steg des Bügels verrastbar ist.

Weiterhin besteht eine vorteilhafte Weiterbildung, wenn durch das erste und zweite Schaltgerät ein Motorabzweig gebildet ist.

Ein Ausführungsbeispiel der Erfindung wird im folgenden anhand einer Zeichnung näher erläutert. Es zeigen:
- FIG 1: eine Seitenansicht einer Einrichtung zur etagenweisen Anordnung zweier Schaltgeräte in der Montagestellung,
- FIG 2: eine Seitenansicht einer Einrichtung gemäß FIG 1 in der Betriebsstellung,
- FIG 3: eine Frontansicht der Einrichtung gemäß FIG 1 und FIG 2, teilweise im Schnitt,
- FIG 4: einen U-förmigen Bügel,
- FIG 5: eine Seitenansicht des U-förmigen Bügels gemäß FIG 4,
- FIG 6: eine Unteransicht auf den Bügel gemäß FIG 4,
- FIG 7: eine Obersicht auf den Bügel gemäß FIG 4,
- FIG 8: eine Seitenansicht einer Schubplatte,
- FIG 9: eine Unteransicht der Schubplatte gemäß FIG 8,
- FIG 10: eine Oberansicht der Schubplatte gemäß FIG 8,
- FIG 11: eine weitere Seitenansicht der Schubplatte gemäß FIG 8

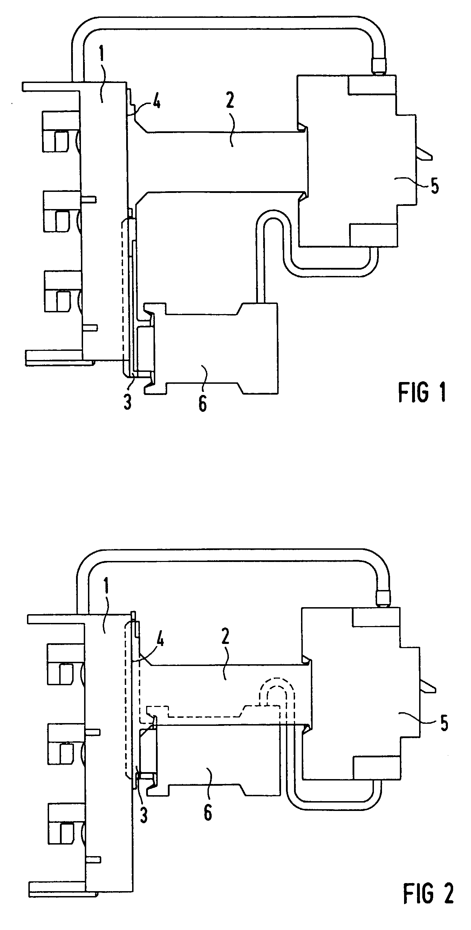

In FIG 1 ist eine Einrichtung zur etagenweisen Anordnung zweier Schaltgeräte dargestellt. Sie besteht im wesentlichen aus einem Sammelschienenadapter 1, einem Bügel 2 und einer Schubplatte 3. Der hier U-förmig ausgebildete Bügel 2 ist an der Frontplatte 4 des Sammelschienenadapters 1 befestigt und trägt an seinem der Frontplatte 4 abgewandte Ende einen Leistungsschalter 5 als erstes Schaltgerät. Die Schubplatte 3 ist rechteckförmig ausgebildet und liegt auf der Frontplatte 4 verschiebbar auf. Auf der Schubplatte 3 ist ein Schutz 6 als zweites Schaltgerät verrastet. Bei dieser Montagestelle der erfindungsgemäßen Einrichtung werden die Schaltgeräte 5,6 nicht nur montiert bzw. demontiert, sondern es werden auch die Leitungsverbindungen z.B. zwischen dem Leistungsschalter 5 und dem Sammelschienenadapter 1 sowie zwischen dem Leistungsschalter 5 und dem Schütz 6 durchgeführt.

FIG 2 zeigt die Betriebsstellung der erfindungsgemäßen Einrichtung, bei der die Schubplatte 3 mit dem aufgeschnappten Schutz 6 in den durch den Bügel 2 gebildeten Zwischenraum eingeschoben ist, so daß die beiden Schaltgeräte 5,6 hintereinander bzw. etagenweise angeordnet sind. Ansonsten stimmt FIG 2 mit der Darstellung in FIG 1 überein, und es erübrigt sich daher eine weitergehende Beschreibung.

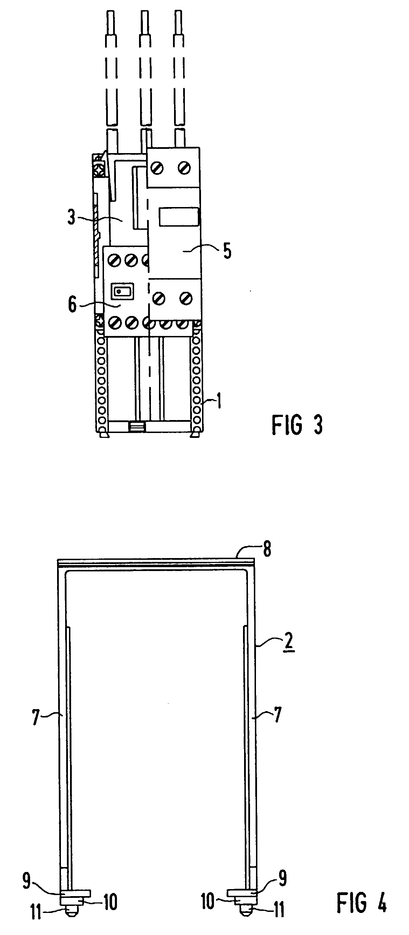

FIG 3 zeigt die Frontansicht der erfindungsgemäßen Einrichtung teilweise im Schnitt, wobei wegen der etagenweisen Anordnung der Schaltgeräte 5,6 in der Betriebsstellung das Schutz 6 weitgehend durch den voran angeordneten Leistungsschalter 5 verdeckt ist. Neben diesen Schaltgeräten 5,6 ist, wie aus den FIG 2 und 3 ersichtlich, vor dem unteren Bereich des Sammelschienenadapters 1 noch Raum vorhanden, in dem bedarfsweise weitere Schaltgeräte angeordnet werden könnten.

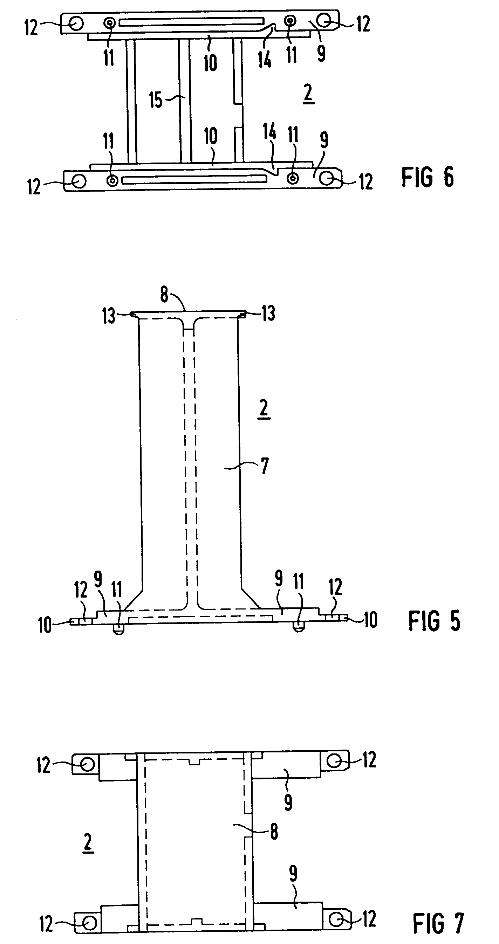

FIG 4 zeigt den U-förmigen Bügel 2, der aus zwei Schenkeln 7 und einem diese verbindenden Steg 8 gebildet ist. Die Schenkel 7 und der Steg 8 sind einstückig, z.B. aus einem Biegestanzteil gefertigt. Die Schenkelenden sind jeweils mit zwei in den Innenraum des Bügels 2 hineinragenden schienenförmigen Bereichen unterschiedlicher Breite und Länge versehen, die als Führungsschienen dienen. Dabei ist die in FIG 4 obenliegende Führungsschiene 9 breiter und länger als die darunterliegende Führungsschiene 10 ist. In den Endbereichen der Führungsschiene 10 sind nach außen gerichtete Abstandshalter 11 vorgesehen.

FIG 5 zeigt eine Seitenansicht bei Drehung des Bügels 2 gemäß FIG 4. FIG 5 zeigt die übereinanderliegenden Führungsschienen 9, 10 an den Schenkelenden des Bügels 2 sowie die Abstandselemente 11 an der Unterseite der Führungsschiene 10, an deren Enden sich jeweils ein Bohrloch 12 befindet. Der Steg 8 ist an seinen gegenüberliegenden Seiten mit Nasen 13 ausgebildet.

FIG 6 zeigt eine Unteransicht des Bügels 2. Sie zeigt die beiden Führungsschienen 9, 10 an den Schenkelenden. Die Führungsschiene 10 weist die Bohrlöcher 12 und die Abstandselemente 11 auf und ist in ihrem einen Endbereich an der Innenseite jeweils mit einer Ausnehmung 14 versehen. Der Steg 8 ist zur mechanischen Stabilisierung mit einer zum Innenraum gerichteten Rippe 15 versehen.

FIG 7 zeigt den Bügel 2 mit den vorangehend beschriebenen Teilkomponenten in seiner Oberansicht.

Der Bügel 2 kann über seine Bohrlöcher 12 auf die als Tragplatte 4 dienende Frontplatte des Sammelschienenadapters 1 aufgeschraubt werden wie FIG 1, 2 zeigen. Dabei wird zwischen den Führungsschienen 9, 10 des Bügels 2 und der Frontplatte 4 durch die Abstandselemente 11 ein bestimmter Abstand sichergestellt. Die Führungsschienen 9, 10 dienen einerseits zum geführten Einschub der im folgenden beschriebenen Schubplatte 3 sowie andererseits zur Verrastung dieser über die Ausnehmung 14 in der Führungsschiene 10. Über die Nasen 13 am Steg 8 ist ein elektrisches Schaltgerät, z.B. ein Leistungsschalter 5 wie in FIG 1 und 2 dargestellt, verrastbar.

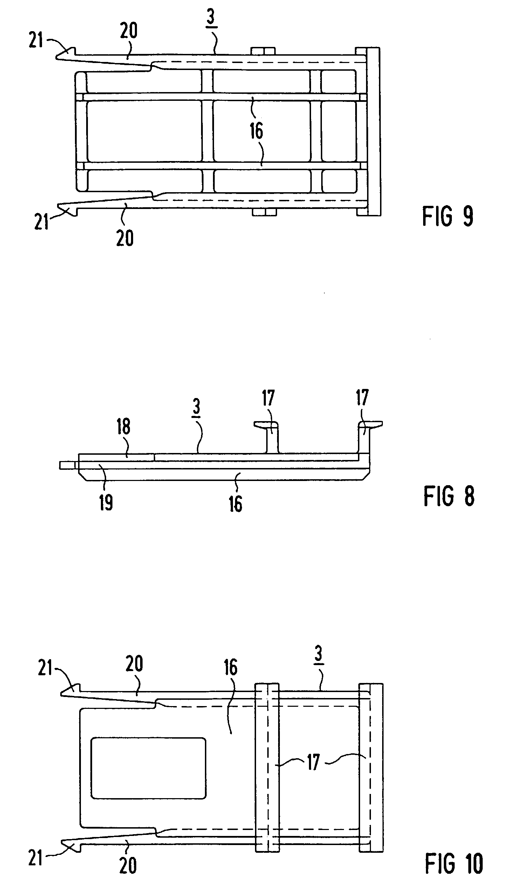

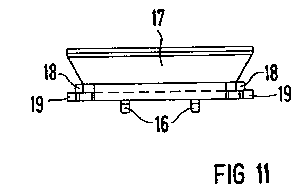

In FIG 8 ist die Schubplatte 3 in der Seitenansicht dargestellt. An der Oberseite der Schubplatte 3 sind im einen Endbereich Befestigungsmittel 17 nach Art einer Hutschiene angeformt, die Schubplatte 3 ist in den Randbereichen abgesetzt, wie auch FIG 11 zeigt. Der obere Bereich 18 der Schubplatte 3, an dem die Befestigungsmittel 17 angeformt sind, ist mit seinen parallelen Randseiten schmaler ausgebildet als der darunter liegende untere Bereich 19, an dessen Unterseite sich Auflagestege 16 befinden. Die Breite des oberen Bereiches 18 und unteren Bereiches 19 ist dem Zwischenraum zwischen den Führungsschienen 9, 10 des Bügels 2 angepaßt, so daß die Schubplatte 3 hierdurch geführt in den durch den Bügel 2 zweigebildeten Zwischenraum eingeschoben werden kann.

FIG 9 zeigt eine Unteransicht der Schubplatte 3, deren unterer Bereich 19 in der Darstellung am linksseitigen Ende beidseitig als Rastarm 20 mit einer Rastnase 21 ausgebildet ist. Im übrigen sind der Darstellung gemäß FIG 9 die bereits beschriebenen Teilkomponenten mit den zugeordneten Bezugszeichen zu entnehmen. Zur Vervollständigung der Darstellung der Schubplatte 3 zeigt FIG 10 ihre Oberansicht.

Nach dem geführten Einschub der Schubplatte 3 in den Zwischenraum des Bügels 2 verrasten die Rastnasen 21 in den angepaßt ausgebildeten Ausnehmungen 14 an der Innenseite der Führungsschiene 10 vom Bügel 2. Das Schutz 6 ist als zweites Schaltgerät über die hutschienenartigen Befestigungsmittel 17 auf der Schubplatte 3 verrastbar.

## Patentansprüche

1. Einrichtung zur etagenweisen Anordnung von Schaltgeräten, mit den folgenden Merkmalen :
a) die Einrichtung umfaßt eine Tragplatte (4) und einen Bügel (2)
b) der Bügel (2) weist zwei Schenkel (7) und einen diese verbindenden Steg (8) auf, wodurch ein Zwischenraum gebildet ist,
c) der Bügel (2) ist über seine Schenkel (7) an der Tragplatte (4) befestigt,
d) dem Zwischenraum abgewandt ist ein erstes Schaltgerät (5) auf den Bügel (2) aufschnappbar,
**gekennzeichnet durch** folgende Merkmale:
e) die Einrichtung umfaßt eine Schubplatte (3)
f) auf die Schubplatte (3) ist ein zweites Schaltgerät (6) aufschnappbar,
g) die Schubplatte (3) ist mit dem aufgeschnappten zweiten Schaltgerät (6) geführt in den Zwischenraum einschiebbar.

2. Einrichtung nach Anspruch 1, **dadurch gekennzeichnet,** daß die Schenkelenden des Bügels (2) als Führungsschienen (9, 10) ausgebildet sind.

3. Einrichtung nach Anspruch 1 oder 2, **dadurch gekennzeichnet**, daß die Schubplatte (3) an den Schenkelenden des Bügels (2) in der eingeschobenen Stellung verrastbar ist.

4. Einrichtung nach einem der vorangehenden Ansprüche, **dadurch gekennzeichnet,** daß als Tragplatte die Frontplatte (4) eines Sammelschienenadapters (1) dient.

5. Einrichtung nach einem der vorangehenden Ansprüche, **dadurch gekennzeichnet,** daß auf der Schubplatte (3) auf der dem Zwischenraum zugewandten Seite Befestigungsmittel (17) vorgesehen sind.

6. Einrichtung nach einem der vorangehenden Ansprüche, **dadurch gekennzeichnet,** daß an der Schubplatte (3) Rastarme (20) mit Rastnasen (21) vorgesehen sind, die in formmaßig angepaßten Ausnehmungen (14) an der Innenseite der Schenkelenden des Bügels (2) verrastbar sind.

7. Einrichtung nach einem der vorangehenden Ansprüche, **dadurch gekennzeichnet,** daß das erste Schaltgerät (5) am Steg (8) des Bügels (2) verrastbar ist.

8. Einrichtung nach einem der vorangehenden Ansprüche, **dadurch gekennzeichnet**, daß durch das erste Schaltgerät (5) und das zweite Schaltgerät (6) ein Motorabzweig gebildet ist.

## Claims

1. Device for the tiered arrangement of switching devices, having the following features:
a) the device comprises a mounting plate (4) and a bracket (2),
b) the bracket (2) comprises two legs (7) and a crosspiece (8) connecting said legs, as a result of which an interspace is formed,
c) the bracket (2) is fastened via its legs (7) to the mounting plate (4),
d) facing away from the interspace a first switching device (5) is capable of being snap-fitted onto the bracket (2), characterised by the following features:
e) the device comprises a thrust plate (3),
f) a second switching device (6) is capable of being snap-fitted onto the thrust plate (3),
g) the thrust plate (3) is capable of being inserted into the interspace, guided by the snap-fitted second switching device (6).

2. Device according to Claim 1, characterised in that the ends of the legs of the bracket (2) take the form of guide rails (9, 10).

3. Device according to Claim 1 or 2, characterised in that the thrust plate (3) is capable of latching on the ends of the legs of the bracket (2) in the inserted position.

4. Device according to one of the preceding claims, characterised in that the front plate (4) of a bus-bar adapter (1) serves as thrust plate.

5. Device according to one of the preceding claims, characterised in that fastening means (17) are provided on the thrust plate (3) on the side facing the interspace.

6. Device according to one of the preceding claims, characterised in that latching arms (20) with latching lugs (21) which are capable of latching in recesses (14) of adapted shape on the inside of the ends of the legs of the bracket (2) are provided on the thrust plate (3).

7. Device according to one of the preceding claims, characterised in that the first switching device (5) is capable of latching on the crosspiece (8) of the bracket (2).

8. Device according to one of the preceding claims, characterised in that a motor branch circuit is formed by the first switching device (5) and the second switching device (6).

## Revendications

1. Dispositif pour monter de manière étagée des appareils de coupure, comportant les caractéristiques suivantes :
a) le dispositif comprend une plaque (4) de support et un étrier (2),
b) l'étrier (2) comporte deux branches (7) et une âme (8) les reliant, ce qui forme un intervalle,
c) l'étrier (2) est fixé à la plaque (4) de support par l'intermédiaire de ses branches (7),
d) un premier appareil (5) de coupure peut être encliqueté sur l'étrier (2) du côté éloigné de l'intervalle,
caractérisé par les caractéristiques suivantes
e) le dispositif comprend une plaque (3) coulissante,
f) un deuxième appareil (6) de coupure peut être encliqueté sur la plaque (3) coulissante,
g) la plaque (3) coulissante peut être insérée dans l'intervalle en étant guidée par le deuxième appareil (6) de coupure encliqueté.

2. Dispositif suivant la revendication 1, caractérisé en ce que les extrémités des branches de l'étrier (2) sont réalisées en rails (9, 10) de guidage.

3. Dispositif suivant la revendication, 1 ou 2, caractérisé en ce que la plaque (3) coulissante peut être encliquetée en la position insérée aux extrémités des branches de l'étrier (2).

4. Dispositif suivant l'une des revendications précédentes, caractérisé en ce que la plaque (4) frontale d'un adaptateur (1) de rail collecteur sert de plaque de support.

5. Dispositif suivant la revendication 1, caractérisé en ce qu'il est prévu des moyens (17) de fixation sur la plaque (3) coulissante, du côté tourné vers l'intervalle.

6. Dispositif suivant l'une des revendications précédentes, caractérisé en ce qu'il est prévu sur la plaque (3) coulissante des bras (20) d'encliquetage comportant des becs (21) d'encliquetage qui peuvent être encliquetés dans des évidements (14) de forme adaptée ménagés du côté intérieur des extrémités des branches de l'étrier (2).

7. Dispositif suivant l'une des revendications précédentes, caractérisé en ce que le premier appareil (5) de coupure peut être encliqueté à l'âme (8) de l'étrier (2).

8. Dispositif suivant l'une des revendications précédentes, caractérisé en ce qu'il est formé une dérivation de moteur par le premier appareil (5) de coupure et le deuxième appareil (6) de coupure.
